# EUROPEAN PATENT APPLICATION

(11) **EP 4 694 209 A1**
(43) Date of publication of application: **11.02.2026**
(21) Application number: 24934797.2
(22) Date of filing: 09.10.2024
(51) Int. Cl.: H04R 25/00

(54) **WEARABLE DEVICE**

(30) Priority: 11.04.2024 CN 202410436619
(71) Applicant: Shenzhen Shokzhear Co., Ltd., Shenzhen, Guangdong 518000 (CN)
(72) Inventor: ZHOU, Weihua, Shenzhen, Guangdong 518108 (CN); WANG, Yueqiang, Shenzhen, Guangdong 518108 (CN)
(74) Representative: Wang, Bo
(86) International application number: PCT/CN2024/123774
(87) International publication number: WO 2025/213732

(57) **Abstract**

The present disclosure provides a wearable device comprising a housing assembly, an interface assembly, and a control board assembly. The housing assembly includes a connection port. The interface assembly includes a wiring end and an interface end opposite to each other, the interface assembly is disposed within the housing assembly in a manner that the interface end faces the connection port, and the interface assembly is connected to an inner wall of the housing assembly. The control board assembly is disposed within the housing assembly and is connected to the wiring end through a wire assembly. By arranging the interface end and the connection port to face and communicate with each other, an external device may be connected to the wearable device in a plug-in manner through the interface assembly, thereby supporting functions such as device debugging, system upgrades, and adjustment of operating modes and parameters. Meanwhile, by connecting the interface assembly to the housing assembly, the housing assembly may be directly used as an installation carrier for the interface assembly, which not only fully utilizes the structure and internal space of the housing assembly, but also facilitates miniaturization and weight reduction of the wearable device, and facilitates disassembly and maintenance of the wearable device.

## Description

### CROSS-REFERENCE TO RELATED APPLICATIONS

This application claims priority to Chinese Application No. 202410436619.0, filed on April 11, 2024, the contents of which are incorporated herein by reference.

### TECHNICAL FIELD

The present disclosure relates to the field of electronic device technology, and in particular, to a wearable device.

### BACKGROUND

With the increasing prevalence of electronic devices, such devices have become indispensable tools in daily life and work, and user demands for electronic devices are continuously rising. In the prior art, in-ear electronic devices or over-ear electronic devices, such as hearing aids and earphones, typically have a main body including a housing, an internal frame, and various functional components. After the various functional components are assembled together via the internal frame, the housing is used for encapsulation to form the complete main body of an electronic device. However, the electronic device of this structural form suffer from large size and weight, which is not conducive to miniaturization and weight reduction of the electronic device.

### SUMMARY

One or more embodiments of the present disclosure provide a wearable device that achieves miniaturization and weight reduction.

One or more embodiments of the present disclosure provide a wearable device comprising:
a housing assembly including a connection port, the connection port connecting an interior of the housing assembly to an exterior of the housing assembly;
an interface assembly including an interface end and a wiring end opposite to each other, the interface assembly being arranged within the housing assembly in a manner that the interface end faces the connection port, and the interface assembly being connected to an inner wall of the housing assembly;
a control board assembly disposed within the housing assembly; and
a wire assembly connected between the wiring end and the control board assembly.

In one embodiment, the interface assembly includes an interface member and a fixing member that cooperate with each other, the interface member includes the interface end and the wiring end, and the fixing member is connected to the inner wall of the housing assembly to limit and fix the interface member within the housing assembly.

In one embodiment, a second fixing structure is formed between the fixing member and the inner wall of the housing assembly, and the second fixing structure is disposed to limit a relative position between the fixing member and the housing assembly along at least two different directions.

In one embodiment, a direction of a line connecting the interface end and the connection port is defined as an axial direction, a direction intersecting the axial direction is defined as a first radial direction, and another direction intersecting the axial direction and perpendicular to the first radial direction is defined as a second radial direction.

The interface member is fixed to one side of the fixing member along the first radial direction; the second fixing structure includes a second positioning protrusion and a second positioning groove hole, the second positioning protrusion protrudes, along the first radial direction, from an inner wall of the housing assembly facing away from the interface member, and the second positioning groove hole is disposed on the fixing member; and the second positioning protrusion is inserted into the second positioning groove hole along the first radial direction to limit the fixing member along the axial direction and the second radial direction.

In one embodiment, the second fixing structure further includes a supporting protrusion, the supporting protrusion and the second positioning protrusion protrude from a same inner wall of the housing assembly, the supporting protrusion encloses around the second positioning protrusion; and the supporting protrusion abuts the fixing member to form a glue-accommodation space for accommodating sealant between the fixing member and the inner wall of the housing assembly.

In one embodiment, the second fixing structure further includes a reinforcing protrusion, the reinforcing protrusion protrudes toward a surface of the fixing member facing the glue-accommodation space, and the reinforcing protrusion is inserted into the glue-accommodation space.

In one embodiment, a dimension of the supporting protrusion along the first radial direction gradually decreases, from a side of the supporting protrusion away from the connection port to a side of the supporting protrusion close to the connection port, along the axial direction.

In one embodiment, a direction of a line connecting the interface end and the connection port is defined as an axial direction, a direction intersecting the axial direction is defined as a first radial direction, and another direction intersecting the axial direction and perpendicular to the first radial direction is defined as a second radial direction;
the fixing member includes a supporting portion and a mounting portion, the mounting portion is located on one side of the supporting portion along the first radial direction, and the interface member is fixed to the mounting portion; the second fixing structure is formed between an inner wall of the housing assembly facing away from the mounting portion along the first radial direction and the supporting portion; and the second fixing structure is disposed to limit the fixing member at least along the axial direction and the second radial direction.

In one embodiment, the housing assembly is provided with a first limiting protrusion protruding from an inner wall facing the mounting portion along the first radial direction, and the mounting portion is provided with a limiting table; the first limiting protrusion and the limiting table abut each other along the axial direction and/or the first radial direction to limit a relative position between the fixing member and the housing assembly.

In one embodiment, the mounting portion is further provided with a mounting through-hole, the mounting through-hole penetrates through the mounting portion along the axial direction, and the interface member extends through the mounting through-hole and is fixed to the mounting portion.

In one embodiment, a blocking structure for abutting the interface member is disposed within the mounting through-hole, the blocking structure is configured to prevent the interface member from moving along the axial direction toward a side away from the connection port, and the blocking structure is further configured to prevent the interface member from rotating relative to the mounting portion.

In one embodiment, a direction of a line connecting the interface end and the connection port is defined as an axial direction, a direction intersecting the axial direction is defined as a first radial direction, and another direction intersecting the axial direction and perpendicular to the first radial direction is defined as a second radial direction;
the housing assembly is provided with two fixing protrusions protruding from an inner wall along the first radial direction, and the two fixing protrusions are spaced apart and opposite to each other along the second radial direction; opposite ends of the fixing member along the second radial direction are connected to the two fixing protrusions in one-to-one correspondence to clamp and fix the interface member between the fixing member and the inner wall of the housing assembly.

In one embodiment, the fixing member includes a clamping ring portion and an end ear portion, and the end ear portion is disposed at two opposite ends of the clamping ring portion along the second radial direction; the end ear portion and a corresponding fixing protrusion abut each other along the second radial direction to clamp the interface member between the clamping ring portion and the inner wall of the housing assembly.

In one embodiment, an engaging notch is disposed at one end of the end ear portion facing the corresponding fixing protrusion along the second radial direction, and the fixing protrusion is engaged in a corresponding engaging notch.

In one embodiment, a first glue-accommodation groove for accommodating sealant is disposed on the inner wall of the housing assembly, the first glue-accommodation groove and the fixing protrusion are located on a same inner wall of the housing assembly, and the end ear portion is disposed to cover a groove opening of the first glue-accommodation groove.

In one embodiment, the fixing member further includes a blocking structure that abuts the interface member, the blocking structure is configured to prevent the interface member from moving along the axial direction toward a side away from the connection port, and the blocking structure is further configured to prevent the interface member from rotating relative to the fixing member.

In one embodiment, the wearable device further comprises a plurality of interface assemblies. The plurality of interface assemblies include a first interface assembly and a second interface assembly for connecting to different external devices. The housing assembly includes a plurality of connection ports, and the plurality of connection ports include a first connection port and a second connection port;
the first connection port is disposed on one side of the housing assembly along a first direction, and an interface end of the first interface assembly and the first connection port are opposite to each other along the first direction;
the second connection port is disposed on one side of the housing assembly along a third direction, and an interface end of the second interface assembly and the second connection port are opposite to each other along the third direction; and
the first direction and the third direction intersect.

In one embodiment, the housing assembly includes a first housing and a second housing; the first housing and the second housing are connected and opposite to each other along a second direction to enclose an internal space of the housing assembly;
the first interface assembly and the second interface assembly are fixedly connected to an inner wall of the second housing, respectively, and the control board assembly is fixedly connected to an inner wall of the first housing; and
any two of the first direction, the second direction, or the third direction intersect.

In one embodiment, each of the first housing and the second housing is an integral structure made of polyimide.

In one embodiment, the wearable device further includes a sealing member. The sealing member cooperates and is connected to the housing assembly to selectively close and open the first connection port or the second connection port.

In one embodiment, the wearable device further includes an in-ear loudspeaker. The in-ear loudspeaker includes a loudspeaker assembly and a wearing assembly; the wearing assembly is connected between the loudspeaker assembly and the housing assembly;

The housing assembly is wearable between a rear side of an ear and the head of a user, and the loudspeaker assembly is insertable into an ear canal of the user.

In one embodiment, the wearable device is an air-conduction hearing aid.

One or more embodiments of the present disclosure provide the wearable device, comprising the housing assembly, the interface assembly, and the control board assembly. The housing assembly includes the connection port. The interface assembly includes the wiring end and the interface end opposite to each other, the interface assembly is arranged in a manner that the interface end faces the connection port, and the interface assembly is connected to the inner wall of the housing assembly. The control board assembly is disposed within the housing assembly and is connected to the wiring end through the wire assembly. By arranging the interface end and the connection port to face and communicate with each other, an external device may be connected to the wearable device in a plug-in manner through the interface assembly, thereby supporting functions such as device debugging, system upgrades, and adjustment of operating modes and parameters. Meanwhile, by connecting the interface assembly to the housing assembly, the housing assembly may be directly used as an installation carrier for the interface assembly, which not only fully utilizes the structure and internal space of the housing assembly, but also facilitates miniaturization and weight reduction of the wearable device, and facilitates disassembly and maintenance of the wearable device.

### BRIEF DESCRIPTION OF THE DRAWINGS

FIG. 1 is a schematic diagram illustrating an overall assembly structure of a wearable device according to some embodiments;
FIG. 2 is a schematic diagram illustrating an exemplary cross-sectional view of a wearable device according to some embodiments;
FIG. 3 is a schematic diagram illustrating an exploded view of a wearable device according to some embodiments;
FIG. 4 is a schematic diagram illustrating another exemplary cross-sectional view of a wearable device according to some embodiments;
FIG. 5 is a schematic diagram illustrating an exploded view of a housing assembly in a wearable device according to some embodiments;
FIG. 6 is a schematic diagram illustrating an exemplary structure of a second housing in a wearable device according to some embodiments;
FIG. 7 is a schematic diagram illustrating an exemplary structure of a first housing in a wearable device according to some embodiments;
FIG. 8 is a schematic diagram illustrating an exemplary structural assembly of an interface assembly in a wearable device according to some embodiments;
FIG. 9 is a schematic diagram illustrating an exploded view of a first interface assembly in a wearable device according to some embodiments;
FIG. 10 is a schematic diagram illustrating an exemplary cross-sectional view of a region where a first interface assembly is located in a wearable device according to some embodiments;
FIG. 11 is a schematic diagram illustrating an exemplary structure of a first fixing member in a wearable device according to some embodiments;
FIG. 12 is a schematic diagram illustrating an exploded view of a second interface assembly in a wearable device according to some embodiments; and
FIG. 13 is a schematic diagram illustrating an exemplary structure of a second fixing member in a wearable device according to some embodiments.

### Reference Signs:

100, housing assembly; 100a, accommodation cavity; 110, first housing; 110a, first housing wall; 110b, second housing wall; 110c, third housing wall; 110d, fourth housing wall; 110e, fifth housing wall; 110f, sound pickup hole channel; 110g, button window; 120, second housing; 120a, sixth housing wall; 120b, seventh housing wall; 120c, eighth housing wall; 120d, ninth housing wall; 120e, tenth housing wall; 120f, first connection port; 120g, second connection port; 120h, battery window;
131, supporting arm; 132, fixing pin; 141, first positioning protrusion; 142, first positioning groove hole; 182, second positioning protrusion; 183, supporting protrusion; 184, first limiting protrusion; 185, fixing protrusion; 186, first glue-accommodation groove;
200, control board assembly; 300, microphone assembly; 400, button assembly; 500, first interface assembly; 510, first interface member; 520, first fixing member; 521, mounting portion; 522, supporting portion; 523, second positioning groove hole; 524, mounting through-hole; 525, reinforcing protrusion; 526, limiting table; 527, first blocking structure;
600, second interface assembly; 610, second interface member; 620, second fixing member; 621, clamping ring portion; 622, end ear portion; 623, engaging notch; 624, second blocking structure; 630, sealing member; 700, battery assembly; 810, loudspeaker assembly; 820, wearing assembly.

### DETAILED DESCRIPTION

The present disclosure is further described in detail below through specific embodiments in conjunction with the accompanying drawings. Similar reference signs are used for similar elements in different embodiments. In the following embodiments, many details are described to facilitate a better understanding of the present disclosure. However, those skilled in the art can readily recognize that some features may be omitted under different circumstances, or may be replaced by other elements, materials, or methods. In some instances, certain operations related to the present disclosure are not shown or described in the present disclosure. This is to avoid obscuring the core aspects of the present disclosure with excessive description. For those skilled in the art, a detailed description of these related operations is not necessary, as they can fully understand the related operations based on the descriptions in the present disclosure and general technical knowledge in the art.

Furthermore, the features, operations, or characteristics described in the present disclosure may be combined in any suitable manner to form various embodiments. Simultaneously, the steps or actions in the method descriptions can also be rearranged or adjusted in a manner obvious to those skilled in the art. Therefore, the various sequences in the present disclosure and drawings are only for clearly describing a particular embodiment and do not imply a mandatory sequence, unless it is explicitly stated that a particular sequence must be followed.

The reference signs assigned to components herein, such as "first," and "second", are used solely to distinguish the described objects and carry no sequential or technical meaning. The terms "connect," and "couple" as used in the present disclosure, unless otherwise specified, include both direct and indirect connections (or couplings).

The present disclosure primarily uses an in-ear hearing aid as an example to describe a wearable device provided by the embodiments. It should be noted that the in-ear hearing aid is merely one specific implementation of the wearable device. The wearable device may also be other types of devices, such as hearing aids, earphones, or glasses.

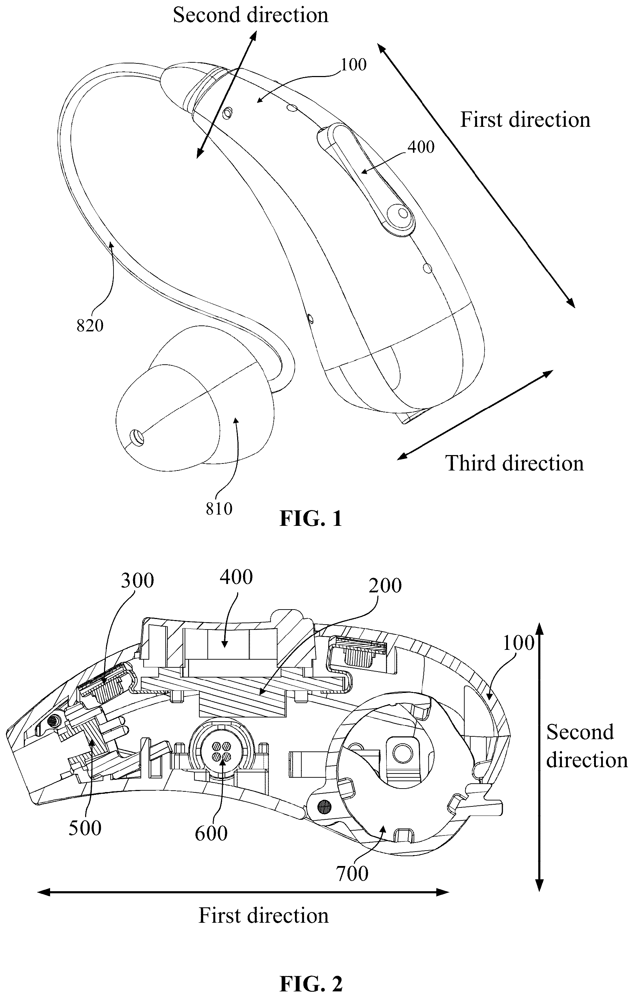

Please refer to FIG. 1, the wearable device includes a housing assembly 100, a core assembly, a loudspeaker device, and other functional components as needed.

The core assembly may be understood as a collection of components that implement main functions of the wearable device. For example, the core assembly supports functions such as sound signal acquisition, electrical signal conversion and processing, device power-on/off, volume adjustment, and power supply. The core assembly is disposed within the housing assembly 100 to combine with the housing assembly 100 and form a complete functional structure. For ease of distinction and description, a combined structure of the housing assembly 100 and the core assembly is defined as a device body.

The loudspeaker device may be understood as a collection of components that implement a function of playing a sound signal for the wearable device. In some embodiments, the loudspeaker device is connected to the device body. That is, the loudspeaker device is connected to an exterior of the housing assembly 100.

Merely by way of example, please refer to FIG. 1, the loudspeaker device is an in-ear loudspeaker, including a loudspeaker assembly 810 and a wearing assembly 820. The loudspeaker assembly 810 is configured to be adaptively inserted into an ear canal of a user and play a sound signal to the user. The wearing assembly 820 is connected between the loudspeaker assembly 810 and the housing assembly 100 in a form that electrically connects the loudspeaker assembly 810 and the core assembly, and the wearing assembly 820 is configured to establish a signal connection relationship between the core assembly and the loudspeaker assembly 810.

The wearing assembly 820 may be a flexible cable with a signal transmission function, or other types of wires that have both a signal transmission function and a shape memory function. One end of the wearing assembly 820 may be fixed and electrically connected to the loudspeaker assembly 810, and the other end of the wearing assembly 820 may be connected to the housing assembly 100 in a detachable or non-detachable manner and electrically connected to the core assembly.

The device body may be stably worn on an ear of the user and the loudspeaker assembly 810 may be inserted into the ear canal of the user through the wearing assembly 820. The device body (e.g., the core assembly) may acquire an external sound signal, convert the sound signal into an electrical signal, and output the electrical signal to the loudspeaker assembly 810, then the loudspeaker assembly 810 may play a corresponding sound signal, thereby realizing a hearing aid function of the wearable device.

In other embodiments, the loudspeaker device may also be arranged in the wearable device in other forms. As another example, referring to the core assembly, the loudspeaker device is directly disposed inside or outside the housing assembly 100 to form a wearable device with different structural forms or functions. That is, by selecting and arranging the loudspeaker device, the device body, and the structural relationship between the loudspeaker device and the device body, wearable devices of other structural forms, such as hearing aids, earphones, or glasses, may also be constructed.

It may be understood that when the wearable device is powered on, the cooperation between the core assembly and the loudspeaker device enables conversion between a sound signal (e.g., a mechanical vibration signal) and an electrical signal, allowing the user to hear sound through the ear. Generally, mechanical vibrations may act on an eardrum of the user based on the principle of air conduction, with air serving as the primary medium, and subsequently act on the auditory nerve; mechanical vibration may also act directly on the auditory nerve of the user based on the principle of bone conduction, with the bones and tissues of the user serving as the medium. Regarding the sound perceived by the user, the former may be referred to as "air-conduction sound" while the latter may be referred to as "bone-conduction sound".

Based on this, by selecting and configuring the specific functional structures of the core assembly and the loudspeaker device, the wearable device may be constructed to generate air-conduction sound, bone-conduction sound, or both air-conduction sound and bone-conduction sound simultaneously.

To describe the structural configuration of the device body more clearly and in detail, three directions that mutually intersect or are perpendicular to each other are defined herein based on an outer contour of the device body, including a first direction, a second direction, and a third direction.

Merely by way of example, when the wearable device is in a certain natural placement state, the first direction represents a length direction of the wearable device, the second direction represents a thickness direction of the wearable device, and the third direction represents a width direction of the wearable device.

As another example, when the wearable device is normally worn between the rear side of the ear and the head, with the user as a reference, the first direction represents a vertical direction of the user, the second direction represents a front-rear direction of the user, and the third direction represents a lateral direction of the user.

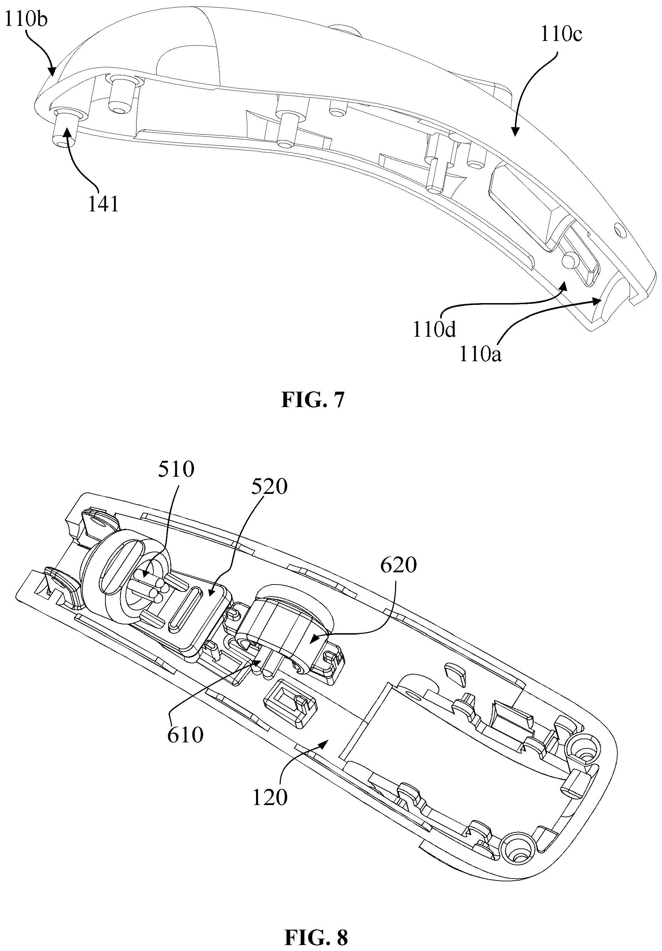

In one embodiment, please refer to FIG. 1 to FIG. 7, the housing assembly 100 includes a first housing 110 and a second housing 120. The first housing 110 and the second housing 120 are opposite to each other and connected cooperatively to enclose and form an accommodation cavity 100a within the housing assembly 100 (or between the first housing 110 and the second housing 120). The core assembly is disposed within the accommodation cavity 100a. At least a portion of the core assembly is connected to the first housing 110, and at least another portion of the core assembly is connected to the second housing 120.

Merely by way of example, the core assembly includes a control board assembly 200, a microphone assembly 300, a button assembly 400, a first interface assembly 500, a second interface assembly 600, and a battery assembly 700. For ease of distinction and description, functional components in the core assembly that are connected to the first housing 110 are defined as a first assembly, and functional components in the core assembly that are connected to the second housing 120 are defined as a second assembly. The first assembly may include the control board assembly 200, the microphone assembly 300, and the button assembly 400. The second assembly may include the first interface assembly 500, the second interface assembly 600, and the battery assembly 700.

The microphone assembly 300 is electrically connected to the control board assembly 200, and the microphone assembly 300 and the control board assembly 200 are fixed to the first housing 110, respectively. The microphone assembly 300 is configured to acquire a sound signal from an exterior of the wearable device (e.g., the exterior of the housing assembly 100). For example, external environmental sound causes related components of the microphone assembly 300 to produce mechanical vibrations, thereby enabling the microphone assembly 300 to acquire the sound signal.

The control board assembly 200 plays a regulatory and management role in the wearable device. For example, the control board assembly 200 is configured to receive the sound signal acquired by the microphone assembly 300, convert the sound signal into an electrical signal, and output the electrical signal to the loudspeaker device (e.g., the loudspeaker assembly 810), thereby enabling the loudspeaker device to play the sound signal to the user.

The button assembly 400 is movably connected to the first housing 110 and cooperatively arranged with the control board assembly 200. Through the cooperation of the button assembly 400 and the control board assembly 200, an input of a preset instruction may be achieved. For example, power-on and power-off instructions of the wearable device, a volume adjustment instruction, or other instructions may be input to the control board assembly 200 through the button assembly 400.

The first interface assembly 500, the second interface assembly 600, and the battery assembly 700 are connected to the second housing 120 and are electrically connected to the control board assembly 200. For example, an electrical signal connection relationship is established between the control board assembly 200 and the first interface assembly 500, the second interface assembly 600, and the battery assembly 700 through a wire assembly. The first interface assembly 500 is configured to connect the loudspeaker device to the device body. For example, the first interface assembly 500 is detachably connected to the wearing assembly 820 in a plug-in manner, thereby establishing a signal connection relationship between the loudspeaker assembly 810 and the control board assembly 200, such that the loudspeaker assembly 810 may generate or play a sound signal based on an electrical signal provided by the control board assembly 200.

The second interface assembly 600 is configured to connect to an external control device (e.g., a mobile phone, computer, etc.) for data transmission between the external control device and the wearable device. Merely by way of example, a working mode, working parameters, volume level, etc., of the wearable device may be adaptively adjusted according to the user's needs through the external control device. The battery assembly 700 is configured to supply power to power-consuming components in the wearable device, thereby supporting a normal operation of the wearable device.

In some embodiments, other functional components may be added to the core assembly, or some functional assemblies may be omitted. For example, the first interface assembly 500 may be omitted, and the loudspeaker assembly 810 may be directly connected to the control board assembly 200 through the wearing assembly 820. As another example, the second interface assembly 600 may be replaced with a wireless communication module to perform data transmission between the wearable device and the external control device through the wireless communication module.

That is, the core assembly may include at least one of the control board assembly 200, the microphone assembly 300, the button assembly 400, the first interface assembly 500, the second interface assembly 600, or the battery assembly 700.

In some embodiments, based on an internal structure of the housing assembly 100, functional assemblies in the first assembly and the second assembly may also be swapped. For example, the first interface assembly 500 belongs to the first assembly and is connected to the first housing 110.

That is, the control board assembly 200, the microphone assembly 300, the button assembly 400, the first interface assembly 500, the second interface assembly 600, the battery assembly 700, etc., may be selectively connected to the first housing 110 or the second housing 120 according to the structural layout and functional configuration of the housing assembly 100 or the device body.

It should be noted that the description of a wire assembly is introduced in the present disclosure. The wire assembly may be a wire, a cable, a flexible printed circuit (FPC), etc., to adapt to the internal structure of the housing assembly 100 and the spatial arrangement relationships among the various related functional assemblies, thereby flexibly establishing electrical connection relationships between the related functional assemblies.

Based on this, by using the first housing 110 and the second housing 120 as installation carriers for a plurality of functional components in the wearable device, the core assembly may be dispersedly disposed in different parts of the housing assembly 100.

On the one hand, compared to related technologies that an internal frame independent of the housing assembly 100 is used as an installation carrier of the core assembly, the present disclosure may achieve full utilization of the structure and internal space of the housing assembly 100, reduce a count of internal assemblies in the wearable device, and thus facilitate the miniaturization and weight reduction of the wearable device.

On the other hand, the dispersed arrangement of the core assembly can not only realize rapid assembly and disassembly of the wearable device, but also perform targeted disassembly, maintenance, recycling, and reuse of the first assembly and the second assembly by disassembling the first housing 110 and the second housing 120.

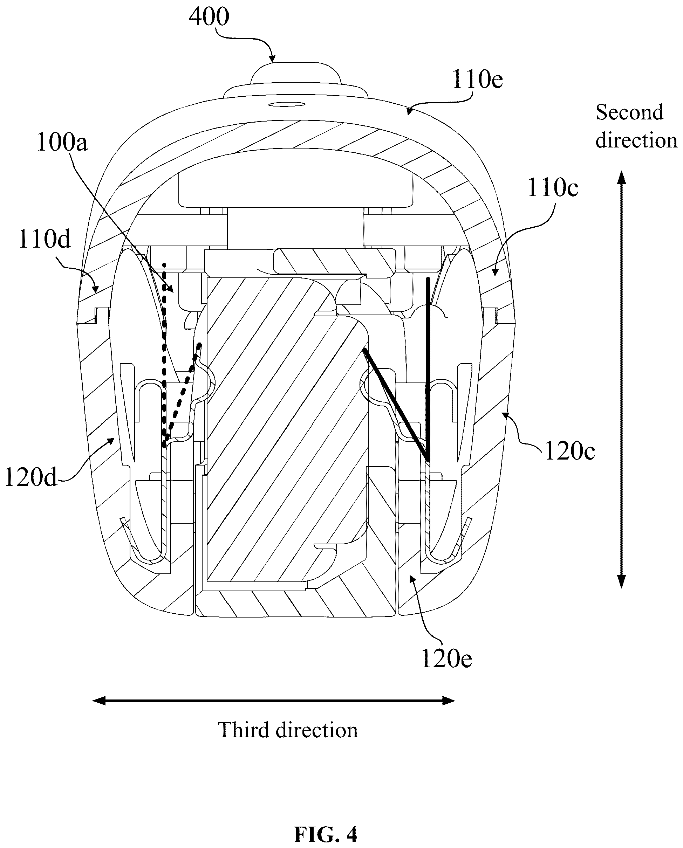

In one embodiment, please refer to FIG. 4 to FIG. 7, both the first housing 110 and the second housing 120 adopt a housing-type structure with an opening. The first housing 110 and the second housing 120 are cooperatively connected along the second direction with openings facing each other to enclose and form the accommodation cavity 100a.

Regarding the core assembly, the first assembly (e.g., the control board assembly 200, the microphone assembly 300, the button assembly 400, etc.) is connected to an inner wall of the first housing 110, so that at least a portion of the first assembly is accommodated within a housing space of the first housing 110. The second assembly (e.g., the first interface assembly 500, the second interface assembly 600, the battery assembly 700, etc.) is connected to an inner wall of the second housing 120, so that at least a portion of the second assembly is accommodated within a housing space of the second housing 120.

First, by connecting the first assembly to the inner wall of the first housing 110 and connecting the second assembly to the inner wall of the second housing 120, it may prevent a connection structure between the core assembly and the housing assembly 100 from being exposed outside the housing assembly 100, thereby avoiding an impact on the outer contour of the device body and improving the aesthetic appearance and wearability of the device body.

Second, the housing spaces of the first housing 110 and the second housing 120 accommodating the first assembly and the second assembly provide a certain protective effect, avoiding damage to the first assembly or the second assembly due to impacts, etc., before the housing assembly 100 is assembled.

Third, by configuring the first housing 110 and the second housing 120 as a housing-type structure with internal volume and an opening, the first housing 110 may be assembled with the first assembly and the second housing 120 may be assembled with the second assembly. Therefore, after the wiring of the wire assembly is completed, the assembly of the device body may be completed conveniently and quickly.

In some embodiments, the first housing 110 adopts a housing-type structure with an opening, and the second housing 120 adopts a cover plate-type structure. The second housing 120 is disposed on the first housing 110 in a manner that the second housing 120 covers the opening of the first housing 110, and the second housing 120 and the first housing 110 enclose to form the accommodation cavity 100a. Regarding the core assembly, the first assembly is connected to the inner wall of the first housing 110 and is accommodated within a housing space of the first housing 110, and the second assembly is connected to a surface of the second housing 120 facing the first housing 110. After the first housing 110 and the second housing 120 are assembled, the second assembly is equivalent to being accommodated within the housing space (e.g., the accommodation cavity 100a) of the first housing 110. Alternatively, the first housing 110 may adopt the cover plate-type structure, and the second housing 120 may adopt the housing-type structure with an opening.

Thus, the housing assembly 100 is formed by assembling the housing-type structure with the cover plate-type structure, which not only facilitates rapid assembly of the device body but also enables wearable devices with different structural forms or assembly methods to meet different application requirements.

In one embodiment, referring to FIG. 4 to FIG. 7, an assembly structure is disposed between the first housing 110 and the second housing 120. The assembly structure is configured to assemble and fix the first housing 110, on which the first assembly is mounted, with the second housing 120, on which the second assembly is mounted, into an integral unit, to substantially form a complete outer contour of the device body, i.e., the housing assembly 100. The housing assembly 100 enables moving, carrying, wearing, operating, and using the wearable device or the device body.

The assembly structure may adopt different configurations depending on a connection form between the first housing 110 and the second housing 120. For example, the assembly structure is a corresponding structure suitable for bonding, welding, or other connection forms between the first housing 110 and the second housing 120. As another example, the assembly structure is a corresponding structure adapted suitable for snap-fit, locking, or other detachable connection forms between the first housing 110 and the second housing 120.

Merely by way of example, referring to FIG. 4 to FIG. 7, the assembly structure includes a first fixing structure and a first positioning structure. The first fixing structure is configured to fix the first housing 110 stably and the second housing 120 together as an integral unit. The first positioning structure is configured to position a relative position between the first housing 110 and the second housing 120, which supports rapid and accurate assembly of the first housing 110 and the second housing 120, and is configured to cooperate with the first fixing structure to enhance a structural combination strength of the first housing 110 and the second housing 120.

The first fixing structure includes a supporting arm 131 and a fixing pin 132. The supporting arm 131 protrudes from an inner wall surface of the second housing 120. For example, the supporting arm 131 and the second housing 120 are an integral structure. The fixing pin 132 cooperates with the supporting arm 131.

The first positioning structure includes a first positioning protrusion 141 and a first positioning groove hole 142. The first positioning protrusion 141 protrudes from an inner wall surface of the first housing 110, and the first positioning protrusion 141 and the first housing 110 are an integral structure. The first positioning groove hole 142 is integrally formed in the second housing 120 at a position corresponding to the first positioning protrusion 141.

In a process of assembling the first housing 110 and the second housing 120 to form the housing assembly 100, the first positioning protrusion 141 may be inserted into the first positioning groove hole 142 based on an alignment relationship between the first positioning protrusion 141 and the first positioning groove hole 142, thereby defining a relative position between the first housing 110 and the second housing 120. For example, an opening end surface of the first housing 110 abuts an opening end surface of the second housing 120, which enables a first space and a second space to communicate and form the accommodation cavity 100 (the supporting arm 131 is located within the accommodation cavity 100a at this time).

Subsequently, the fixing pin 132 is inserted from the exterior of the housing assembly 100 into the interior of the housing assembly 100 through a position of the first housing 110 corresponding to the supporting arm 131(e.g., a pin hole structure is disposed at the position of the first housing 110 corresponding to the supporting arm 131), thereby extending through the supporting arm 131 and fixing the first housing 110 and the supporting arm 131 as an intergal unit, so as to achieve a detachable assembly and fixation of the first housing 110 and the second housing 120.

In some embodiments, positions of the supporting arm 131 and the fixing pin 132, and positions of the first positioning protrusion 141 and the first positioning groove hole 142 may be swapped. For example, the supporting arm 131 protrudes from the inner wall of the first housing 110, and the first positioning protrusion 141 protrudes from the inner wall of the second housing 120.

Through the cooperation of the first fixing structure and the first positioning structure, assembly and fixation of the first housing 110 and the second housing 120 may be achieved conveniently, quickly, and accurately, thereby effectively enhancing the structural stability of the housing assembly 100 (or an outer housing of the device body) and providing structural support for a detachable assembly of the device body or the housing assembly 100.

For example, in a process of assembling the device body or the housing assembly 100, the first positioning protrusion 141 is inserted into the first positioning groove hole 142, and the fixing pin 132 extends through the supporting arm 131 based on the cooperation between the supporting arm 131 and the fixing pin 132, then the first housing 110 and the second housing 120 are assembled and fixed together to form the housing assembly 100. In this manner, the accuracy of the combined assembly of the first housing 110 and the second housing 120 may be ensured.

For example, when disassembly and maintenance of the device body are required, the housing assembly 100 may be disassembled merely by pulling out the fixing pin 132, which facilitates inspection and maintenance of internal structures and related components of the device body.

In some embodiments, the first fixing structure and the first positioning structure also adopt other structural forms.

For example, a plurality of engaging snap-fit structures are disposed on the first housing 110 and the second housing 120. The snap-fit structures replace the first fixing structure and the first positioning structure to achieve assembly and fixation of the first housing 110 and the second housing 120.

As another example, a protruding shaft structure is disposed on the inner wall of the first housing 110 at a position corresponding to the supporting arm 131, and a pin hole structure for the protruding shaft structure to insert into is disposed on the supporting arm 131. The first fixing structure is formed through the cooperation between the protruding shaft structure and the pin hole structure. Therefore, the first housing 110 and the second housing 120 are positioned and fixed along different positions and orientations based on the cooperation of the first fixing structure and the first positioning structure.

In some embodiments, the first fixing structure is omitted. One or more first positioning structures are disposed to position the first housing 110 and the second housing 120. Then, the first housing 110 and the second housing 120 are fixed by means such as bonding or welding.

Alternatively, the first positioning structure is omitted. A plurality of sets of supporting arms 131 and fixing pins 132 are disposed to fix and connect the first housing 110 to the second housing 120 at different positions. All such variations are not described herein in detail.

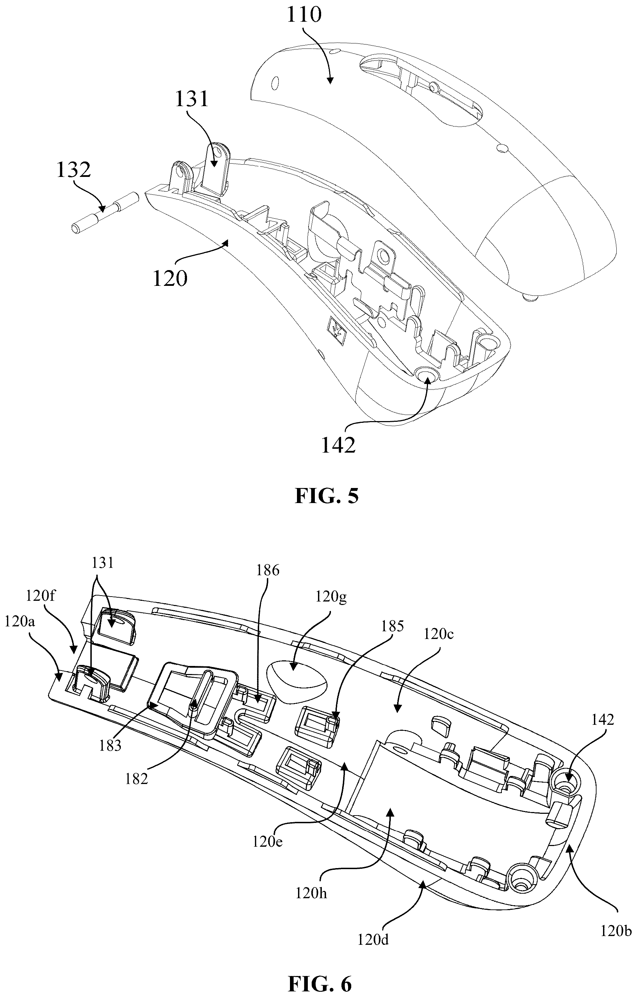

In one embodiment, referring to FIG. 4 and FIG. 5, the first housing 110 and the second housing 120 are opposite to each other along the second direction and are cooperatively connected to form the housing assembly 100. The first fixing structure and the first positioning structure are disposed at two opposite ends of the housing assembly 100 along the first direction, respectively. For ease of description, the two opposite ends of the housing assembly 100 along the first direction (or the length direction) are defined as a first end and a second end of the housing assembly 100, respectively. When the wearable device is in a normal wearing state, the first end of the housing assembly 100 may be a top end of the housing assembly 100, and the second end of the housing assembly 100 may be a bottom end of the housing assembly 100. The first fixing structure is disposed at the first end of the housing assembly 100, and the first positioning structure is disposed at the second end of the housing assembly 100.

By disposing the first fixing structure and the first positioning structure at the two opposite ends of the housing assembly 100, respectively, the first housing 110 and the second housing 120 may be preliminarily positioned and assembled through the first positioning structure during assembly. Subsequently, the first housing 110 and the second housing 120 may be fixed through the cooperation between the fixing pin 132 and the supporting arm 131. Such an arrangement facilitates quick and accurate identification of the assembly orientation between the first housing 110 and the second housing 120, thereby improving assembly efficiency of the housing assembly 100 or the device body, and further facilitates inspection and maintenance of internal structures and related functional components by disassembling the housing assembly 100.

In some implementation schemes, the control board assembly 200, the microphone assembly 300, etc., are connected to the inner wall of the first housing 110, and the first interface assembly 500, the battery assembly 700, etc., are connected to the inner wall of the second housing 120. Both the first housing 110 and the second housing 120 adopt the housing-type structure. The supporting arm 131 protrudes from the inner wall of the second housing 120, extending toward a side where the first housing 110 is located, substantially along the second direction. The fixing pin 132 extends through the first housing 110 and the supporting arm 131 substantially along the third direction. Correspondingly, the first positioning protrusion 141 protrudes from the inner wall or the opening end surface of the second housing 120, extending toward a side where the second housing 120 is located, substantially along the second direction.

Thus, based on differentiated arrangement directions of the supporting arm 131 and the first positioning protrusion 141, a combination body of the second housing 120 and the second assembly may be regarded as a mounting body, thus guiding assembly personnel to quickly and accurately assemble a combination body of the first housing 110 and the first assembly onto the mounting body.

In one embodiment, referring to FIG. 2 to FIG. 8, both the first housing 110 and the second housing 120 adopt the housing-type structure. The core assembly includes the control board assembly 200, the microphone assembly 300, the button assembly 400, the first interface assembly 500, the second interface assembly 600, and the battery assembly 700.

For ease of distinction and description, two housing walls of the first housing 110 that are opposite to each other along the first direction are defined as a first housing wall 110a and a second housing wall 110b. Two housing walls of the first housing 110 that are opposite to each other along the third direction are defined as a third housing wall 110c and a fourth housing wall 110d. A housing wall of the first housing 110 that is connected between the first housing wall 110a, the second housing wall 110b, the third housing wall 110c, and the fourth housing wall 110d along the second direction is defined as a fifth housing wall 110e.

Two housing walls of the second housing 120 that are opposite to each other along the first direction are defined as a sixth housing wall 120a and a seventh housing wall 120b. Two housing walls of the second housing 120 that are opposite to each other along the third direction are defined as an eighth housing wall 120c and a ninth housing wall 120d. A housing wall of the second housing 120 that is connected between the sixth housing wall 120a, the seventh housing wall 120b, the eighth housing wall 120c, and the ninth housing wall 120d along the second direction is defined as a tenth housing wall 120e.

The first housing wall 110a and the sixth housing wall 120a together form a first side wall of the housing assembly 100, and the second housing wall 110b and the seventh housing wall 120b together form a second side wall of the housing assembly 100. The fifth housing wall 110e and the tenth housing wall 120e may be understood as a third side wall and a fourth side wall of the housing assembly 100 that are opposite to each other along the second direction. The third housing wall 110c and the eighth housing wall 120c together form a fifth side wall of the housing assembly 100, and the fourth housing wall 110d and the ninth housing wall 120d together form a sixth side wall of the housing assembly 100. Understandably, the first side wall, the second side wall, the third side wall, the fourth side wall, the fifth side wall, and the sixth side wall of the housing assembly 100 are connected and enclose the accommodation cavity 100a.

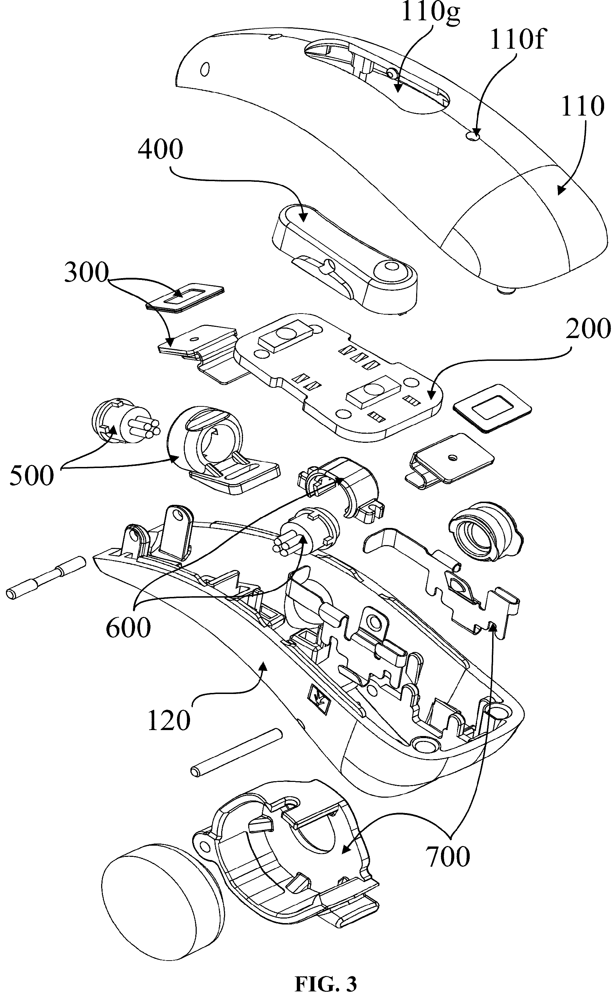

Referring to FIG. 2 and FIG. 3, the control board assembly 200 is disposed within the housing assembly 100. For example, the control board assembly 200 is fixedly connected to the third side wall (e.g., the fifth housing wall 110e). The microphone assembly 300 may be a collection of related functional components capable of forming "air-conduction sound", and the microphone assembly 300 is fixedly disposed on the third side wall, and maintains air passage communication with the exterior of the housing assembly 100 at the third side wall.

Merely by way of example, a sound pickup hole channel 110f is disposed penetrating through the third side wall (e.g., the fifth housing wall 110e), at a position corresponding to the microphone assembly 300. The sound pickup hole channel 110f is in communication with the microphone assembly 300. An external sound signal is conducted to the microphone assembly 300 using air as a medium, thus enabling the microphone assembly 300 to generate mechanical vibrations to acquire the sound signal.

Merely by way of example, a sound guiding channel is disposed within the accommodation cavity 100a. The microphone assembly 300 is in communication with the exterior of the housing assembly 100 through the sound guiding channel, thereby acquiring the sound signal.

In some embodiments, referring to FIG. 2 and FIG. 3, there are two microphone assemblies 300. The two microphone assemblies 300 are disposed at two opposite sides of the control board assembly 200 along the first direction, respectively. Therefore, the device body acquires sound signals from different orientations through the two microphone assemblies 300.

Referring to FIG. 2 and FIG. 3, the button assembly 400 is disposed within the accommodation cavity 100a in a manner that the button assembly 400 is movably connected, e.g., by a rotational connection, a sliding connection, to the inner wall of the first housing 110. At least a portion of the button assembly 400 is exposed from the third side wall.

For example, the button assembly 400 is disposed on a side of the control board assembly 200 facing the third side wall along the second direction. A button window 110g is disposed penetrating through the third side wall at a position corresponding to the button assembly 400. The button assembly 400 is exposed through the button window 110g and protrudes from the third side wall.

By applying a pressing force toward the control board assembly 200 to the button assembly 400, the button assembly 400 may press a button switch on the control board assembly 200, thus realizing input of a preset instruction.

In some embodiments, the button assembly 400 further includes a switch element capable of generating an electrical signal. The button assembly 400 is electrically connected to the control board assembly 200. An instruction is input to the control board assembly 200 by triggering the button assembly 400.

Referring to FIG. 2, FIG. 6, and FIG. 8, the first interface assembly 500 is fixedly connected to the second housing 120, e.g., fixed to the fourth side wall, and disposed within the accommodation cavity 100a, in a manner that at least a portion of the first interface assembly 500 is exposed from the first side wall. Merely by way of example, a first connection port 120f is disposed penetrating through the first side wall. An interface end of the first interface assembly 500 is arranged opposite to and communicating with the first connection port 120f. As another example, the interface end of the first interface assembly 500 extends into the first connection port 120f and extends out of the housing assembly 100 from the first connection port 120f.

Correspondingly, an interface structure capable of being adaptively connected to the first interface assembly 500 in a plug-in manner may be disposed at the loudspeaker device, e.g., at an end of the wearing assembly 820 away from the loudspeaker assembly 810. The loudspeaker device and the device body are fixed through the interface structure and the first interface assembly 500, thus realizing an electrical connection between the loudspeaker device and the core assembly, e.g., the control board assembly 200.

Referring to FIG. 2, FIG. 6, and FIG. 8, the second interface assembly 600 is fixedly connected to the second housing 120, e.g., fixed to the fourth side wall, and disposed within the accommodation cavity 100a, in a manner that at least a portion of the second interface assembly 600 is exposed from the fifth side wall. Merely by way of example, a second connection port 120g is disposed penetrating through the fifth side wall, e.g., the eighth housing wall 120c. An interface end of the second interface assembly 600 is arranged opposite to and communicating with the second connection port 120g. As another example, the interface end of the second interface assembly 600 extends into the second connection port 120g. During the application phase of the wearable device, the second interface assembly 600 may be used to connect to external adjustment devices such as a mobile phone or a computer, allowing for adaptive adjustment of a working mode, working parameters, etc., of the wearable device according to the user's requirements.

Referring to FIG. 2, the battery assembly 700 may be fixedly connected to the second housing 120 or may be movably connected to the second housing 120. Merely by way of example, a battery window 120h is disposed in a region where the second side wall and the fourth side wall abut, and the battery assembly 700 is rotably connected to the second housing 120. Thus, the battery assembly 700 may enter or exit the accommodation cavity 100a through the battery window 120h by rotating the battery assembly 700, thereby facilitating battery replacement.

Based on this, by disposing various parts of the core assembly at different positions or orientations of the housing assembly 100, the structure and internal space of the housing assembly 100 may be utilized more rationally, thereby ensuring performance and facilitating operation of the wearable device.

For example, the first interface assembly 500 and the battery assembly 700 are disposed at two opposite ends of the device body along the first direction, respectively, and the button assembly 400 is disposed at a position between the first interface assembly 500 and the battery assembly 700 along the first direction. On the one hand, such an arrangement not only facilitates connection of the loudspeaker device, e.g., the wearing assembly 820, through the first interface assembly 500, but also facilitates replacement of a battery in the battery assembly 700. On the other hand, when the wearable device is in the wearing state, the button assembly 400 may be located substantially at a middle rear portion or a lower rear portion of the device body, facilitating operation of the button assembly 400 while avoiding structural interference from the first interface assembly 500 and the battery assembly 700 on the button assembly 400.

As another example, by disposing the two microphone assemblies 300 at two opposite sides of the button assembly 400 or the control board assembly 200 along the first direction, respectively, an arcuate structural form adopted by the third side wall may enable sound pickup hole channels 110f corresponding to the two microphone assemblies 300 to be oriented toward different directions. Such an arrangement may effectively prevent external sound signals from being blocked by the user's body parts, ensuring an effective sound signal acquisition by the microphone assembly 300.

In some embodiments, when the wearable device is in a normal wearing state, for example, when the device body is hung on a rear side of an ear of the user through the wearing assembly 820, and the loudspeaker assembly 810 is inserted into an ear canal of the user: the first side wall is a side wall facing a front side of the user along the first direction, the second side wall is a side wall facing a lower side of the use's ear along the first direction, the third side wall is a side wall facing away from a region where the user's head and the rear side of the ear abut along the second direction, the fourth side wall is a side wall facing or contacting the region where the user's head and the rear side of the ear abut along the second direction, the fifth side wall is a side wall facing or contacting the rear side of the user's ear along the third direction, and the sixth side wall is a side wall facing or contacting the user's head along the third direction.

Referring to FIG. 1 to FIG. 3 and FIG. 5, a dimension of the housing assembly 100 along the first direction is greater than dimensions of the housing assembly 100 along the second direction and the third direction. The third side wall and the fourth side wall are configured as arcuate structures adapted to conform to the physiological contour of a junction region between the rear side of the ear and the head. A geometric centerline of the housing assembly 100 along the first direction is configured as an arc segment.

Thus, based on dimensional differences of the housing assembly 100 along different directions and structural forms of the side walls, an outer contour of the housing assembly 100 or the device body is configured as a conformal structure, such that the housing assembly 100 or the device body is adapted to conform to the physiological contour of the junction region between the rear side of the ear and the head, thereby being wearable on the ear in a clamping manner or in an over-ear hanging manner.

In an embodiment where the housing assembly 100 adopts a conformal structure, a dimension of the housing assembly 100 along the third direction gradually decreases from a side where the second side wall is located toward a side where the first side wall is located. That is, a dimension of the first end of the housing assembly 100 along the third direction is less than a dimension of the second end of the housing assembly 100 along the third direction. As a result, along the first direction, a width dimension of an end of the device body for connecting to a loudspeaker (i.e., an end where the first interface assembly 500 is located) may be smaller than a width dimension of an end where the battery assembly 700 is located, thereby satisfying spatial requirements of the housing assembly 100 within the battery assembly 700.

In some embodiments, the housing assembly 100 is made of polyimide (PI). For example, each of the first housing 110 and the second housing 120 is an integral structure made of polyimide. The first housing 110 and the second housing 120 are connected to each other to form the housing assembly 100.

Compared with the prior art, in which a housing of a wearable device is made of materials such as polycarbonate (PC) or ABS plastic (i.e., a terpolymer of acrylonitrile (A), butadiene (B), and styrene (S)), in the present disclosure, the polyimide used herein possesses favorable biocompatibility and high mechanical strength, enables the structural form of the housing assembly 100 (including its external appearance) to be more stable. Furthermore, the housing made of the polyimide may have a reduced thickness, which is advantageous for miniaturization and weight reduction of the wearable device, and enhances the overall structural stability of the housing assembly 100.

As mentioned above, in some embodiments, the wearable device comprises one or more interface assemblies. For a wearable device provided with only one interface assembly, the interface assembly may be the first interface assembly 500 or the second interface assembly 600. For a wearable device provided with a plurality of interface assemblies, the plurality of interface assemblies may include the first interface assembly 500 and the second interface assembly 600.

The following description primarily uses an example where a wearable device is provided with the first interface assembly 500 and the second interface assembly 600, and both the first interface assembly 500 and the second interface assembly 600 are fixedly disposed on the second housing 120. However, it should be noted that the first interface assembly 500 and the second interface assembly 600 may also be fixedly disposed on the first housing 110. Alternatively, one of the first interface assembly 500 or the second interface assembly 600 may be fixed on the first housing 110, and the other of the first interface assembly 500 or the second interface assembly 600 may be fixed on the second housing 120.

In one embodiment, referring to FIG. 2, FIG. 8 to FIG. 13, the housing assembly 100 includes two connection ports. The two connection ports correspond to the interface end of the first interface assembly 500 and the interface end of the second interface assembly 600, respectively. For distinction and description, a connection port corresponding to the first interface assembly 500 is defined as the first connection port 120f, and a connection port corresponding to the second interface assembly 600 is defined as the second connection port 120g. The first connection port 120f penetrates the first side wall of the housing assembly 100 (e.g., the first housing wall 110a and the sixth housing wall 120a). The second connection port 120g penetrates the eighth housing wall 120c of the second housing 120. When the wearable device is in the wearing state, the first connection port 120f is located at a top end of the housing assembly 100 along a vertical direction relative to the user and faces a front side of the user, while the second connection port 120g is located at a middle portion of the housing assembly 100 along a lateral direction relative to the user and faces the rear side of the user's ear.

Referring to FIG. 2, FIG. 3, FIG. 5 to FIG. 11, the first interface assembly 500 includes a first interface member 510 and a first fixing member 520. The first interface member 510 includes an interface end and a wiring end opposite to each other. The first interface member 510 is disposed within the accommodation cavity 100a in a manner that the interface end faces the first connection port 120f, so that a connector of the loudspeaker device (e.g., the wearing assembly 820) may extend into the accommodation cavity 100a through the first connection port 10, thereby being adaptively connected to the first interface member 510 in a detachable or fixed manner. The wiring end of the first interface member 510 is connected to the control board assembly 200. For example, the wiring end of the first interface member 510 is connected to the control board assembly through the wire assembly.

The first fixing member 520 cooperates with the first interface member 510 to fix the first interface member 510 to the second housing 120. For example, the first interface member 510 is clamped and fixed between the first fixing member 520 and the inner wall of the second housing 120. As another example, the first interface member 510 is fixed to the first fixing member 520, and the first fixing member 520 is fixedly connected to the inner wall surface of the second housing 120.

Referring to FIG. 2, FIG. 8, FIG. 12, and FIG. 13, the second interface member 610 includes an interface end and a wiring end opposite to each other. The second interface member 610 is disposed within the accommodation cavity 100a in a manner that the interface end faces the second connection port 120g, so that a connector of an external control device (e.g., a mobile phone, a computer, etc.) may extend into the accommodation cavity 100a through the second connection port 120g, thereby being adaptively connected to the second interface member 610 in a detachable or fixed manner.

A second fixing member 620 cooperates with the second interface member 610 to fix the second interface member 610 to the second housing 120. For example, the second interface member 610 is clamped and fixed between the second fixing member 620 and the inner wall surface of the second housing 120.

In some embodiments, the first fixing member 520 or the second fixing member 620 may be omitted. A buckle or other structure may be disposed on the inner wall of the second housing 120 to snap and fix the first interface member 510 or the second interface member 610 to the second housing 120. Alternatively, the first interface member 510 or the second interface member 610 may be fixed to the second housing 120 directly by bonding, welding, etc. Such variations are not exhaustively described herein.

Based on this, using the second housing 120 as a mounting carrier for the first interface assembly 500 and the second interface assembly 600 allows for full utilization of the structure and internal space of the housing assembly 100, making the structure of the wearable device more compact, which is beneficial for achieving weight reduction and miniaturization of the wearable device.

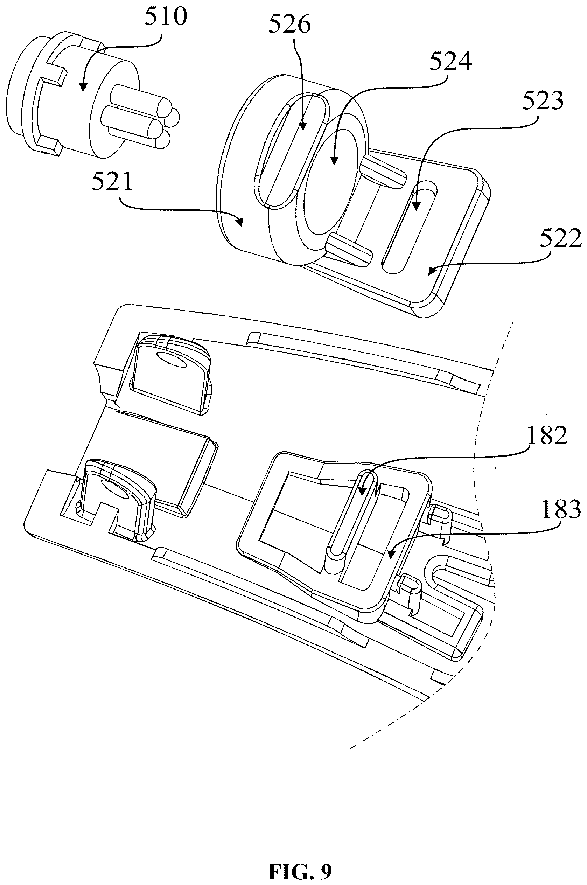

In one embodiment, referring to FIG. 9 to FIG. 11, the first fixing member 520 includes a mounting structure. The mounting structure is configured to fixedly mount the first interface member 510 onto the first fixing member 520. Correspondingly, a second fixing structure is disposed between the first fixing member 520 and the inner wall of the second housing 120 (e.g., the tenth housing wall 120e, which may also be referred to as a cavity wall of the accommodation cavity 100a). The second fixing structure is disposed to limit and fix the first fixing member 520 (together with the first interface member 510) to the second housing 120 along at least two different directions.

Merely by way of example, referring to FIG. 9 to FIG. 11, the first fixing member 520 includes a mounting portion 521 and a supporting portion 522 formed as an integral structure. The second fixing structure is disposed between the supporting portion 522 and the inner wall of the second housing 120. The second fixing structure includes a second positioning protrusion 182 and a second positioning groove hole 523.

The mounting portion 521 protrudes toward a side of the supporting portion 522 facing away from the inner wall of the second housing 120 along the second direction. The mounting structure is disposed on the mounting portion 521. The mounting structure may be a mounting through-hole 524 penetrating the mounting portion 521, or may be a snap-fit structure disposed on the mounting portion 521. Taking the mounting structure including the mounting through-hole 524 as an example, the first interface member 510 may extend through the mounting through-hole 524 and be fixed to the mounting portion 521.

The second positioning protrusion 182 protrudes from the inner wall of the second housing 120 (e.g., an inner surface of the tenth housing wall 120e, which may also be referred to as a cavity wall of the accommodation cavity 100a along the second direction). The second positioning groove hole 523 is disposed penetrating the supporting portion 522 along the second direction. The second positioning protrusion 182 may be inserted into the second positioning groove hole 523, thereby limiting and fixing the supporting portion 522 or the first fixing member 520 to the second housing 120.

The second positioning groove hole 523 and the second positioning protrusion 182 may adopt a non-circular structure. For example, the second positioning protrusion 182 is a rectangular strip with a preset width along the third direction, and the second positioning groove hole 523 is a rectangular through-hole adapted to the second positioning protrusion 182. Such an arrangement may limit relative positions between the first fixing member 520 and the second housing 120 at least along the third direction and the first direction while fully utilizing the internal space of the second housing 120 and facilitating installation and removal of the first fixing member 520 (or the first interface assembly 500).

It should be noted that, for the first interface assembly 500, a direction connecting the interface end of the first interface member 510 and the first connection port 120f is defined as an axial direction. A direction intersecting the axial direction is defined as a first radial direction, and a direction intersecting the axial direction and perpendicular to the first radial direction is defined as a second radial direction. Therefore, regarding the positional relationship between the first interface assembly 500 and the housing assembly 100, the first direction corresponds to the axial direction, the second direction corresponds to the first radial direction, and the third direction corresponds to the second radial direction.

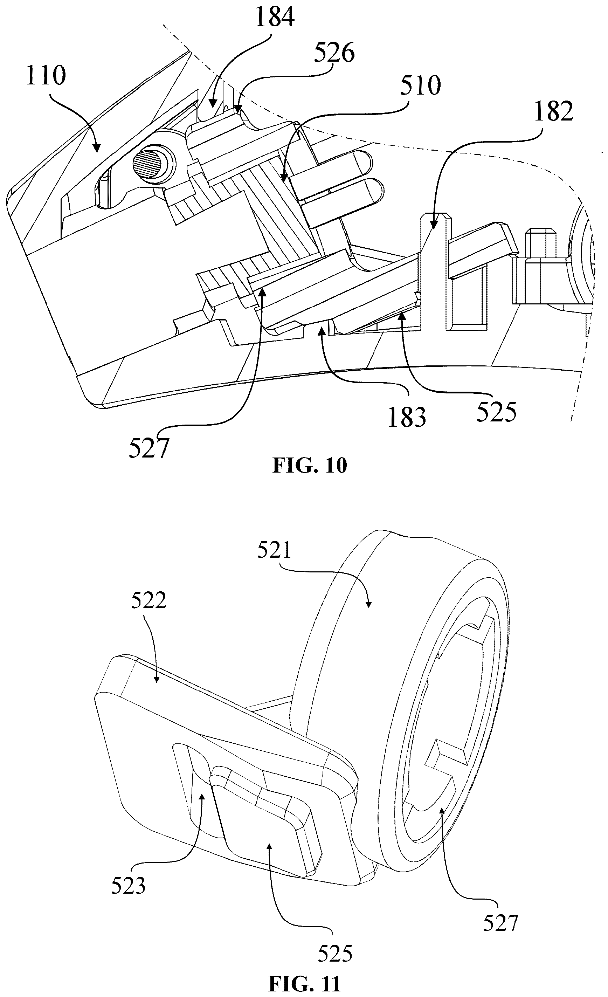

In one embodiment, referring to FIG. 9 and FIG. 10, the second fixing structure further includes a supporting protrusion 183. The supporting protrusion 183 protrudes from the side wall of the second housing 120, as the second positioning protrusion 182 protrudes from the side wall of the second housing 120. The supporting protrusion 183 is arranged surrounding the second positioning protrusion 182.

When the second positioning protrusion 182 is inserted into the second positioning groove hole 523, the supporting protrusion 183 abuts a side of the supporting portion 522 facing away from the mounting portion 521, thus forming a relatively enclosed glue-accommodation space between the supporting protrusion 183, the supporting portion 522, and the inner wall of the second housing 120. By filling the glue-accommodation space with sealant, the first fixing member 520 may be further stably fixed to the second housing 120 through the sealant.

In some embodiments, referring to FIG. 9 and FIG. 10, a dimension (a height dimension) of the supporting protrusion 183 along the second direction gradually decreases from a side of the supporting protrusion 183 away from the first connection port 120f to a side of the supporting protrusion 183 close to the first connection port 120f, along the first direction. Such a configuration may adapt to the conformal structure of the housing assembly 100, allowing the interface end of the first interface member 510 to be substantially coaxial with the first connection port 120f, thereby facilitating connection to the loudspeaker device.

In one embodiment, referring to FIG. 10 and FIG. 11, the second fixing structure further includes a reinforcing protrusion 525. The reinforcing protrusion 525 protrudes toward a surface of the supporting portion 522 facing the glue-accommodation space. When the first fixing member 520 and the second housing 120 are in an assembled state, the reinforcing protrusion 525 may be inserted into the glue-accommodation space.

Based on this, on the one hand, the reinforcing protrusion 525 may increase a contact area between the supporting portion 522 and the sealant, thereby enhancing the stability of the structural connection between the first fixing member 520 and the second housing 120. On the other hand, the reinforcing protrusion 525 located within the glue-accommodation space may abut the supporting protrusion 183 or the second positioning protrusion 182, and may cooperate with the second positioning protrusion 182 to limit an installation position of the first fixing member 520 on the second housing 120.

In one embodiment, referring to FIG. 10, the second fixing structure further includes a first limiting protrusion 184 and a limiting table 526. The first limiting protrusion 184 protrudes toward a cavity wall of the accommodation cavity 100a facing the mounting portion 521 along the second direction. For example, the first limiting protrusion 184 protrudes from the inner wall of the first housing 110 (e.g., the third side wall of the housing assembly 100). The limiting table 526 is disposed on the mounting portion 521, and the limiting table 526 and the first limiting protrusion 184 abut each other along the first direction.

Thus, by utilizing the cooperation between the second fixing structure (e.g., the second positioning protrusion 182) disposed on the second housing 120 and the first limiting protrusion 184 disposed on the first housing 110, the position of the first fixing member 520 may be limited from two opposite sides along the second direction. Therefore, the position of the first fixing member 520 may be limited along various directions, such as the first direction, the second direction, and the third direction, thus ensuring that the first fixing member 520 (together with the first interface member 510) is stably fixed within the housing assembly 100.

In one embodiment, referring to FIG. 10 and FIG. 11, for the mounting structure including the mounting through-hole 524 penetrating the mounting portion 521, a first blocking structure 527 is further disposed within the mounting through-hole 524. The first blocking structure 527 may be configured to have a structural form complementary to an outer contour of the first interface member 510. On the one hand, the first blocking structure 527 abutting the first interface member 510 within the mounting through-hole 524 may prevent the first interface member 510 from moving along the first direction away from the first connection port 120f, thus allowing the first interface member 510 to withstand a pushing force applied by the loudspeaker device and enabling the connection between the first interface member 510 and the loudspeaker device. On the other hand, the first blocking structure 527 may prevent the first interface member 510 from rotating relative to the first fixing member 520, achieving positioned assembly and fixation of the first interface member 510 and the second fixing member 520.

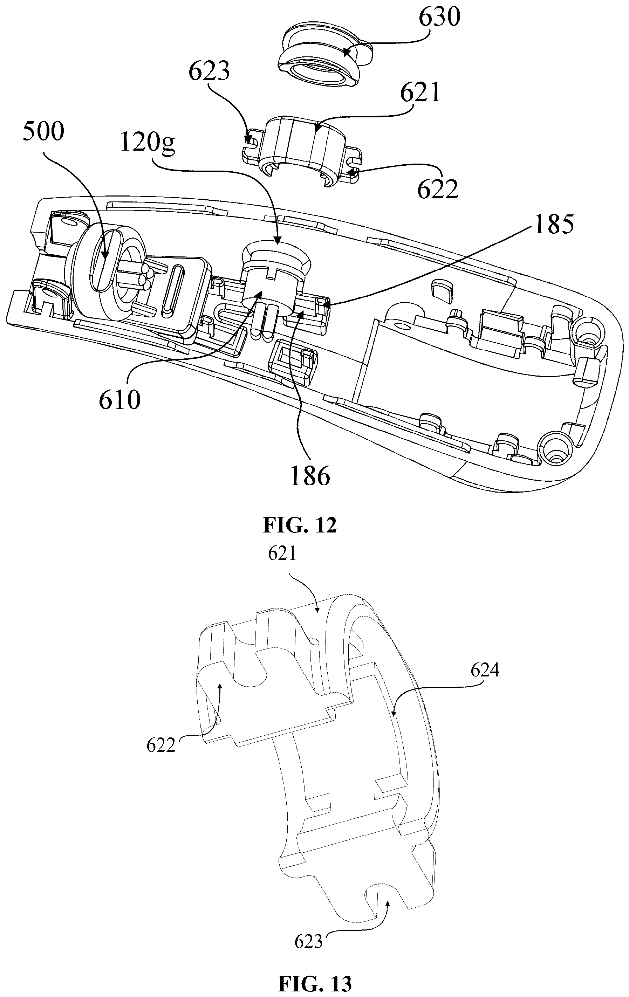

In one embodiment, referring to FIG. 12 and FIG. 13, the second interface member 610 is clamped and fixed between the second fixing member 620 and the inner wall of the housing assembly 100. Specifically, two fixing protrusions 185 protruding toward a side where the first housing 110 is located are disposed on the inner wall of the second housing 120 (i.e., the tenth housing wall 120e, which may also be referred to as the cavity wall of the accommodation cavity 100a) along the second direction. The two fixing protrusions 185 are spaced apart from each other at two sides of the second connection port 120g along the first direction. The second fixing member 620 is substantially configured as a "C"-shaped annular structure, and two ends of the second fixing member 620 along a length direction of the second fixing member 620 are connected to the two fixing protrusions 185 in one-to-one correspondence (e.g., by snap-fit, bonding, sleeve connection, etc.).

Thereby, a clamping space for clamping and fixing the second interface member 610 may be formed between the second fixing member 620 and the inner wall of the second housing 120, such that the second interface member 610 is fixed to the second housing 120 in a clamping manner, and the interface end of the second interface member 610 and the second connection port 120g are opposite to each other.

It should be noted that, for the second interface assembly 600, a direction connecting the interface end of the second interface member 610 and the second connection port 120g is defined as an axial direction, a direction intersecting the axial direction is defined as a first radial direction, and a direction intersecting the axial direction and perpendicular to the first radial direction is defined as a second radial direction. Therefore, regarding the positional relationship between the second interface assembly 600 and the housing assembly 100, the third direction corresponds to the axial direction, the second direction corresponds to the first radial direction, and the first direction corresponds to the second radial direction.

In one embodiment, referring to FIG. 12 and FIG. 13, the second fixing member 620 includes a clamping ring portion 621 and an end ear portion 622 formed as an integral structure. The clamping ring portion 621 is substantially configured as a "C"-shaped structure. The end ear portion 622 is disposed at two ends of the clamping ring portion 621 along a length direction of the clamping ring portion 621. The end ear portion 622 protrudes from a surface of the clamping ring portion 621 along the first direction. By disposing the second fixing member 620 between the two fixing protrusions 185, the end ear portion 622 may abut the corresponding fixing protrusion 185. Therefore, the clamping ring portion 621 undergoes structural contraction and deformation, thereby clamping and fixing the second interface member 610 to the second housing 120.

In one embodiment, referring to FIG. 12 and FIG. 13, an end of the end ear portion 622 facing the corresponding fixing protrusion 185 along the first direction is provided with an engaging notch 623. The fixing protrusion 185 may be inserted into the engaging notch 623. Thus, by means of the cooperation between the engaging notch 623 and the fixing protrusion 185, the second fixing member 620 is positioned and limited between the two fixing protrusions 185, which prevents the first fixing member 620 from shifting relative to the second housing 120 at least along the first direction and the third direction while enhancing the stability of the structural connection between the second fixing member 620 and the second housing 120.

In one embodiment, referring to FIG. 12, a first glue-accommodation groove 186 is further disposed on the inner wall of the second housing 120 where the fixing protrusions 185 are disposed. The first glue-accommodation groove 186 is located within a contour coverage range of the end ear portion 622. That is, the end ear portion 622 is disposed to cover a groove opening of the first glue-accommodation groove 186. By filling the first glue-accommodation groove 186 with sealant, the end ear portion 622 may be adhesively fixed to the second housing 120 through the sealant, thereby further enhancing the stability of the structural connection between the second interface assembly 600 and the second housing 120.

In some embodiments, a structure similar to the reinforcing protrusion 525 is disposed on a surface of the end ear portion 622 facing the first glue-accommodation groove 186 to further increase a contact area between the sealant and the end ear portion 622.

In one embodiment, referring to FIG. 13, the second fixing member 620 (e.g., the clamping ring portion 621) is provided with a second blocking structure 624. The second blocking structure 624 may be configured to have a structural form complementary to an outer contour of the second interface member 610.

On the one hand, the second blocking structure 624 abutting the second interface member 610 may cooperate with the fixing protrusions 185, etc., to prevent the second interface member 610 from moving along the third direction away from the second connection port 120g, allowing the second interface member 610 to withstand a pushing force from the external control device and enabling the connection between the second interface member 610 and the external control device.

On the other hand, the structural cooperation between the second blocking structure 624 and the second interface member 610 may also prevent the second interface member 610 from rotating relative to the second fixing member 620 or the second housing 120, thereby providing fool-proof positioning.

In some embodiments, referring to FIG. 12, since the second interface assembly 600 typically does not need to be connected to the external control device when the wearable device is in a normal usage state, a sealing member 630 is disposed at the second connection port 120g to ensure overall structural sealing or contour integrity of the wearable device. The sealing member 630 may be a plastic sealing plug or another suitable structural component. By inserting the sealing member 630 into the second connection port 120g or pulling the sealing member 630 out from the second connection port 120g, the second connection port 120g may be selectively closed and opened.

In some embodiments where the loudspeaker device is used as a consumable for the wearable device, or in some scenarios where the loudspeaker device is not assembled and connected to the device body, the sealing member 630 is used to temporarily close the first connection port 120f.

In some embodiments where the housing assembly 100 is made of the polyimide, each of the first fixing member 520 and the second fixing member 620 is an integral structure made of the polyimide, thus making the materials of the various components of the device body more consistent. In this way, it is not only beneficial for processing and manufacturing the related components but also ensures that the related components have good biocompatibility and sufficient mechanical strength.

In some embodiments, based on structural differences of the device body or the housing assembly 100, or based on different structural layouts of various assemblies in the core assembly on the housing assembly 100, the first interface assembly 500 and the second interface assembly 600 may also be fixed to the second housing 120 using the same installation form.

As mentioned above, one of the first interface assembly 500 or the second interface assembly 600 may be disposed as desired. Therefore, in some embodiments, the first interface assembly 500 or the second interface assembly 600 may be referred to as an interface assembly, the first interface member 510 or the second interface member 610 may be referred to as an interface member, the first fixing member 520 or the second fixing member 620 may be referred to as a fixing member, and the first connection port 120f or the second connection port 120g may be referred to as a connection port.

The above uses specific examples to explain the present disclosure, which are only used to help understand the present disclosure and are not intended to limit the present disclosure. For those skilled in the art of the present disclosure, based on the ideas of the present disclosure, several simple deductions, modifications, or replacements can also be made.

## Claims

1. A wearable device, comprising:
a housing assembly including a connection port, the connection port connecting an interior of the housing assembly to an exterior of the housing assembly;
an interface assembly including an interface end and a wiring end opposite to each other, the interface assembly being arranged within the housing assembly in a manner that the interface end faces the connection port, and the interface assembly being connected to an inner wall of the housing assembly;
a control board assembly disposed within the housing assembly; and
a wire assembly connected between the wiring end and the control board assembly.

2. The wearable device of claim 1, wherein the interface assembly includes an interface member and a fixing member that cooperate with each other, the interface member includes the interface end and the wiring end; and the fixing member is connected to the inner wall of the housing assembly to limit and fix the interface member within the housing assembly.

3. The wearable device of claim 2, wherein a second fixing structure is formed between the fixing member and the inner wall of the housing assembly, and the second fixing structure is disposed to limit a relative position between the fixing member and the housing assembly along at least two different directions.

4. The wearable device of claim 3, wherein a direction of a line connecting the interface end and the connection port is defined as an axial direction, a direction intersecting the axial direction is defined as a first radial direction, and another direction intersecting the axial direction and perpendicular to the first radial direction is defined as a second radial direction;
the interface member is fixed to one side of the fixing member along the first radial direction; the second fixing structure includes a second positioning protrusion and a second positioning groove hole, the second positioning protrusion protrudes, along the first radial direction, from an inner wall of the housing assembly facing away from the interface member, and the second positioning groove hole is disposed on the fixing member; and the second positioning protrusion is inserted into the second positioning groove hole along the first radial direction to limit the fixing member along the axial direction and the second radial direction.

5. The wearable device of claim 4, wherein the second fixing structure further includes a supporting protrusion, the supporting protrusion and the second positioning protrusion protrude from a same inner wall of the housing assembly, the supporting protrusion encloses around the second positioning protrusion; and the supporting protrusion abuts the fixing member to form a glue-accommodation space for accommodating sealant between the fixing member and the inner wall of the housing assembly.

6. The wearable device of claim 5, wherein the second fixing structure further includes a reinforcing protrusion, the reinforcing protrusion protrudes toward a surface of the fixing member facing the glue-accommodation space, and the reinforcing protrusion is inserted into the glue-accommodation space.

7. The wearable device of claim 5, wherein a dimension of the supporting protrusion along the first radial direction gradually decreases, from a side of the supporting protrusion away from the connection port to a side of the supporting protrusion close to the connection port, along the axial direction.

8. The wearable device according to claim 3, wherein a direction of a line connecting the interface end and the connection port is defined as an axial direction, a direction intersecting the axial direction is defined as a first radial direction, and another direction intersecting the axial direction and perpendicular to the first radial direction is defined as a second radial direction;
the fixing member includes a supporting portion and a mounting portion, the mounting portion is located on one side of the supporting portion along the first radial direction, and the interface member is fixed to the mounting portion; the second fixing structure is formed between an inner wall of the housing assembly facing away from the mounting portion along the first radial direction and the supporting portion; and the second fixing structure is disposed to limit the fixing member at least along the axial direction and the second radial direction.

9. The wearable device of claim 8, wherein the housing assembly is provided with a first limiting protrusion protruding from an inner wall facing the mounting portion along the first radial direction, and the mounting portion is provided with a limiting table; the first limiting protrusion and the limiting table abut each other along the axial direction and/or the first radial direction to limit a relative position between the fixing member and the housing assembly.

10. The wearable device of claim 8, wherein the mounting portion is further provided with a mounting through-hole, the mounting through-hole penetrates through the mounting portion along the axial direction, and the interface member extends through the mounting through-hole and is fixed to the mounting portion.

11. The wearable device of claim 10, wherein a blocking structure for abutting the interface member is disposed within the mounting through-hole, the blocking structure is configured to prevent the interface member from moving along the axial direction toward a side away from the connection port, and the blocking structure is further configured to prevent the interface member from rotating relative to the mounting portion.

12. The wearable device according to claim 2, wherein a direction of a line connecting the interface end and the connection port is defined as an axial direction, a direction intersecting the axial direction is defined as a first radial direction, and another direction intersecting the axial direction and perpendicular to the first radial direction is defined as a second radial direction;
the housing assembly is provided with two fixing protrusions protruding from an inner wall along the first radial direction, and the two fixing protrusions are spaced apart and opposite to each other along the second radial direction; opposite ends of the fixing member along the second radial direction are connected to the two fixing protrusions in one-to-one correspondence to clamp and fix the interface member between the fixing member and the inner wall of the housing assembly.

13. The wearable device of claim 12, wherein the fixing member includes a clamping ring portion and an end ear portion, and the end ear portion is arranged at two opposite ends of the clamping ring portion along the second radial direction; the end ear portion and a corresponding fixing protrusion abut each other along the second radial direction to clamp the interface member between the clamping ring portion and the inner wall of the housing assembly.

14. The wearable device of claim 13, wherein an engaging notch is disposed at one end of the end ear portion facing the corresponding fixing protrusion along the second radial direction, and the fixing protrusion is engaged in a corresponding engaging notch.

15. The wearable device of claim 13, wherein a first glue-accommodation groove for accommodating sealant is disposed on the inner wall of the housing assembly, the first glue-accommodation groove and the fixing protrusion are located on a same inner wall of the housing assembly, and the end ear portion is disposed to cover a groove opening of the first glue-accommodation groove.

16. The wearable device of claim 12, wherein the fixing member further includes a blocking structure that abuts the interface member, the blocking structure is configured to prevent the interface member from moving along the axial direction toward a side away from the connection port, and the blocking structure is further configured to prevent the interface member from rotating relative to the fixing member.

17. The wearable device of any one of claims 1 to 16, further comprising a plurality of interface assemblies, wherein the plurality of interface assemblies include a first interface assembly and a second interface assembly for connecting to different external devices, and the housing assembly includes a plurality of connection ports, and the plurality of connection ports include a first connection port and a second connection port;
the first connection port is disposed on one side of the housing assembly along a first direction, and an interface end of the first interface assembly and the first connection port are opposite to each other along the first direction;
the second connection port is disposed on one side of the housing assembly along a third direction, and an interface end of the second interface assembly and the second connection port are opposite to each other along the third direction; and
the first direction intersects the third direction.

18. The wearable device of claim 17, wherein the housing assembly includes a first housing and a second housing; the first housing and the second housing are connected and opposite to each other along a second direction to enclose an internal space of the housing assembly;
the first interface assembly and the second interface assembly are fixedly connected to an inner wall of the second housing, respectively, and the control board assembly is fixedly connected to an inner wall of the first housing; and
any two of the first direction, the second direction, or the third direction intersect.

19. The wearable device of claim 18, wherein each of the first housing and the second housing is an integral structure made of polyimide.

20. The wearable device of claim 17, further comprising a sealing member, wherein the sealing member cooperates and is connected to the housing assembly to selectively close and open the first connection port or the second connection port.

21. The wearable device of any one of claims 1 to 20, further comprising an in-ear loudspeaker, wherein the in-ear loudspeaker includes a loudspeaker assembly and a wearing assembly, the wearing assembly is connected between the loudspeaker assembly and the housing assembly; and
the housing assembly is wearable between a rear side of an ear and the head of a user, and the loudspeaker assembly is insertable into an ear canal of the user.

22. The wearable device of any one of claims 1 to 21, wherein the wearable device is an air-conduction hearing aid.
